# EUROPEAN PATENT SPECIFICATION

(11) **EP 3 735 665 B1**
(45) Date of publication and mention of the grant of the patent: **21.05.2025**
(21) Application number: 18815216.9
(22) Date of filing: 13.12.2018
(51) Int. Cl.: G06Q 10/08

(54) **MANAGEMENT OF PALLETS OF CONTAINERS OF RECOVERED PRODUCTS**
VERWALTUNG VON PALETTEN MIT BEHÄLTERN AUS WIEDERGEWONNENEN PRODUKTEN
GESTION DE PALETTES DE CONTENANTS DE PRODUITS VALORISES

(30) Priority: 05.01.2018 FR 1850060
(43) Date of publication of application: 11.11.2020
(73) Proprietor: COMPAGNIE GENERALE DES ETABLISSEMENTS MICHELIN, 63000 Clermont-Ferrand (FR)
(72) Inventor: ANNET, Pierre, 63040 CLERMONT-FERRAND Cedex 9 (FR); LAFOND, Sébastien, 63040 CLERMONT-FERRAND Cedex 9 (FR); RICCIARDI, Jim, 63040 CLERMONT-FERRAND Cedex 9 (FR); SEJOURNE, Jérome, 63040 CLERMONT-FERRAND Cedex 9 (FR); SONGIS, Jean, 63040 CLERMONT-FERRAND Cedex 9 (FR)
(74) Representative: M.F.P. Michelin
(86) International application number: PCT/EP2018/084812
(87) International publication number: WO 2019/134804

(56) References cited:
- WO-A1-2017/207152
- WO-A1-2017/207152
- WO-A2-2008/021398
- WO-A2-2008/021398

## Description

### TECHNICAL FIELD

The invention relates in general to the production of rubber mixtures and of vehicle tyres produced therefrom. More particularly, the invention relates to the management of the loading and reloading of pallets with containers of recovered products as starter products in a mixing cycle.

### CONTEXT

In the field of tyre manufacture, there are a number of machines that produce semifinished products. The products produced by these machines are made up of at least two rubber mixtures having different properties (referred to as "complex products"). The machines perform various processes, including extrusion processes, assembly processes and stripping processes, in which some of what is manufactured cannot be used directly in the creation of a tyre (for example, during a change in size, a start-up, etc.). During start-ups, stoppages, changes in size and other known steps, it is commonplace for these machines to generate products that are not used downstream (for example, on the assembly machines). Likewise, on these tyre-building machines for assembling tyres using the complex products produced beforehand (for example, machines known by the trade name VMI MAXX^{™}), products used by these machines cannot be put to use immediately on the production line. For example, the dimensional tolerances have not been met.

Typically, the complex products that are not used "as is", but that can be recovered for reuse after treatment (referred to hereinafter as "recovered products" or "validated products"), are usually stored without any special consideration (for example, on pallets with dividers). Thus, complex products of various natures and various origins may find themselves on the same pallet.

The present invention relates to the management of pallets of containers of recovered products, including the loading, identification, storage and immobilization thereof, so that the recovered products can be used in rubber mixtures. Although numerous types of rubber mixtures are envisaged in the tyre production processes, there are at the same time opportunities for optimizing the availability of the pallets during management thereof.

Patent document WO2008/021398A2 is a relevant background art that focuses on building mixed pallets based on order specifications and container characteristics.

### SUMMARY

The invention relates to a management system for the management of pallets of containers of recovered products, retrieved from a system for the storage of recovered products, according to an ongoing campaign. The system includes:
- a belt (I) on which pallets of containers, including pallets filled with full containers and pallets that are not completely filled with full containers, enter the management system via an inlet;
- a belt (II) on which incomplete pallets of full containers are discharged from the management system via a full-containers outlet;
- a belt (III) on which completely empty pallets enter the management system via an access and are discharged from the management system via the access; and
- a belt (IV) on which complete pallets of empty containers are discharged from the management system via an empty-containers outlet.

The belt (I) includes a provisioning zone in which the pallets of full containers enter a management system; a standby zone in which the pallets remain on standby during the ongoing campaign; and a standby-for-emptying zone in which the pallets remain on standby awaiting emptying. The belt (II) includes two discharge zones in which the pallets with full containers are transferred to the full-containers outlet so that they can be stored in the system for the storage of recovered products; and an emptying zone in which the containers from the pallet on standby are emptied. The belt (III) includes an empty-pallet provisioning/discharge zone in which the empty pallets enter and leave the management system; a pallet-standby zone in which pallets remain on standby awaiting empty containers; and a stacking zone in which the empty containers are stored on available pallets. The belt (IV) includes a discharge zone in which the pallets stocked with the empty containers leave the management system.

In certain embodiments, the system further includes several containers designated for receiving the corresponding recovered products, each container having long sides, short sides and a bottom that together form a space to receive a corresponding recovered product, and a pair of legs that extend below the bottom, and/or top, so as to make the container stackable on a pallet or on itself. In certain embodiments, an interior surface of each long side and/or each short side is inclined with respect to the bottom in order to promote release of the recovered product from the full container. For some of these embodiments, the inclination may be effected by an angle of up to 5°.

In certain embodiments, the system further includes an identification and gripping means with an RFID tag, positioned on the container, that allows an RFID reader positioned on a gripper to identify the container.

In certain embodiments, the identification and gripping means further includes a gripping system with a square recess and a triangular recess built into each short side of the container; and a square projection and a triangular projection on the gripper so that the gripping system allows the container to be suitably positioned by realigning a projection in a corresponding recess.

In certain embodiments, the system further includes a container demoulding system. In certain embodiments, the demoulding system has a demoulding device with retractable fingers in register with orifices aligned along the length of the bottom of the container, such that the retractable fingers enter the container through the orifices and push the recovered product so as to empty the container.

In certain embodiments, the system further includes several pallets previously identified as a function of the ongoing campaign, on which pallets the containers full of recovered products and the empty containers are stored during a pallet transfer management sequence, the transfer management sequence being obtained as a function of the ongoing campaign. In certain embodiments, each pallet used in the management system is capable of storing and transporting up to nine containers.

In certain embodiments, pallets with containers full of recovered products originating from a storage system are fed into the management system.

In certain embodiments, the system further includes an identification means for harmonizing the identification of a pallet with the identification of the containers stored on the identified pallet.

Further aspects of the invention will become obvious from the following detailed description.

### BRIEF DESCRIPTION OF THE DRAWINGS

The nature and various advantages of the invention will become more evident from reading the following detailed description, and from studying the attached drawings, in which the same reference numerals denote identical parts throughout, and in which:
Figure 1 depicts a schematic view of a management system of the invention.
Figure 2 depicts a front perspective view of a container in which a recovered product is stored and transported, and Figure 3 depicts a bottom perspective view of the container.
Figure 4 depicts a schematic front view of a demoulding device used with the container of Figures 2 and 3.
Figure 5 depicts a schematic side view of the demoulding device of Figure 4.
Figure 6 depicts a gripper used for handling the container of Figures 2 and 3.
Figure 7 depicts a schematic view of the management zones of the management system of Figure 1.
Figures 8 to 33 depict schematic views of the management system of Figure 1 performing one cycle of an exemplary management method.

### DETAILED DESCRIPTION

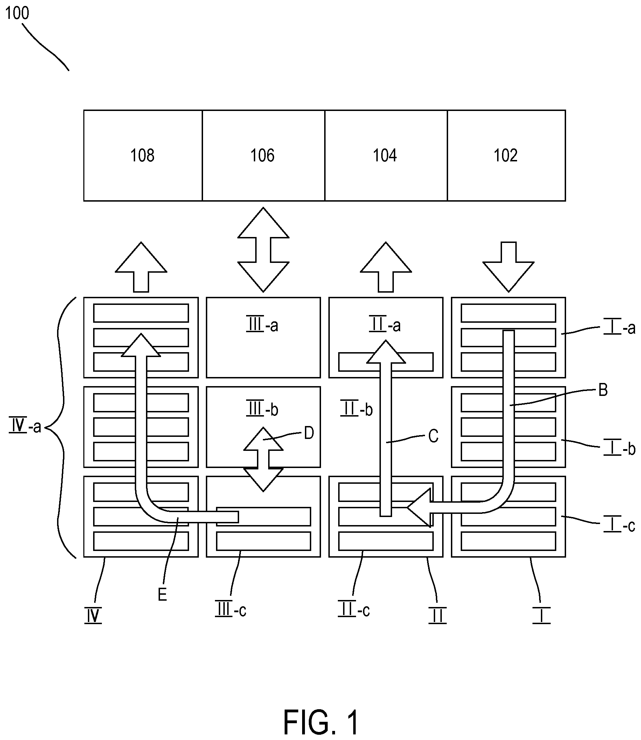

Referring now to the figures, in which the same numerals identify identical elements, Figure 1 depicts an exemplary management system (or "system") 100 that is a system for the management of pallets of containers of recovered products. The management system 100 is situated downstream of a complex-product manufacturing system (for example, at least one of an extrusion system, an assembly system, a stripping system and/or at least one equivalent system).

The management system 100 feeds an internal mixer with recovered products. It is envisioned for the management system 100 to allow the production of rubber mixtures with diverse and varying properties as determined by the performance requirements of the resulting tyre. Thus, during a given mixing cycle, recovered products that have the properties required during the ongoing manufacturing cycle are easily located and supplied by the management system 100.

Upstream of the management system 100, the recovered products are stored in a system for the storage of recovered products (for example, an automated storage and retrieval system (ASRS) or equivalent), these products being considered to be able to be used during a tyre manufacturing cycle. The unused complex products are identified into various kinds and various grades, and each kind and each grade designates a specific complex product, the properties of which are known. In order to ensure a recovered product that has controlled properties, there are various natures of complex products that will be used in rubber mixtures that are used later during a mixing process. In the remainder of the description, the various kinds, grades, batches of complex product will be designated by the term "nature" of complex product. Each nature of complex product has specific properties that can be controlled in order to obtain the recovered products. The recovered products arrive at the management system 100 from the system for the storage of recovered products having already been designated, according to their nature, for reincorporation into a rubber mixture.

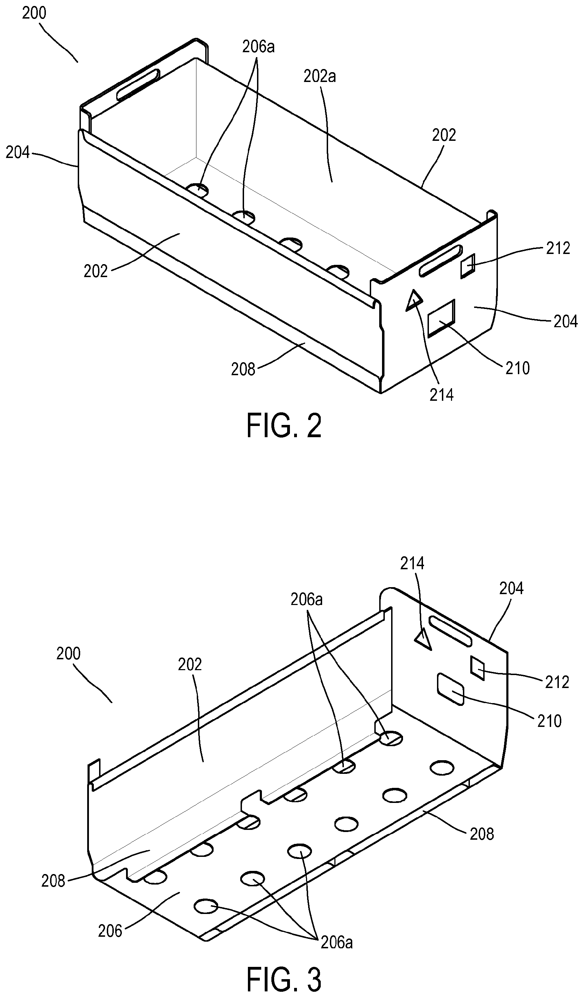

Each recovered product is stored in a container, and each container holds only one recovered product at a time. Each of the recovered products is characterized by a unique identification (for example, using numerals, codes, RFID identifications, hypertext links or equivalent means) that allows an extrusion or mixing machine (or equivalent) to know the complex product that is in the process of being manufactured according to a predefined recipe. With reference also to Figures 2 and 3, a container (or "bucket") 200 comes with a pair of long sides 202, a pair of short sides 204 and a bottom 206 that together form a space to receive a specific recovered product for reuse. Each container 200 includes a pair of legs 208 that extend from the bottom 206 so as to make the container stackable on a pallet or on itself. It is understood that corresponding structure, or an equivalent structure (such as one or more tabs) may be employed at least a portion of the perimeter of the top of the container 200. Such corresponding structure may be used along or in combination with the legs 208 to ensure stackable alignment among multiple containers 200.

In one embodiment of the container 200, the interior surface 202a of each long side 202 is inclined with respect to the bottom 206 (for example, by an angle of up to 5°) in order to promote release of the recovered product from the full container. An optional non-stick coating may be applied to the interior surface 202a to make it easier for the complex product to be extracted from the corresponding container.

In order to control these specific properties, each recovered product is placed in a corresponding container 200 that is designated to receive it. The container 200 and its contents (namely, a recovered product having known properties) are identified, known and managed by virtue of an identification means incorporated into the container 200. Identification of the container 200 is performed either manually (for example, using at least one visual and/or tactile identifier) or automatically (for example using numerals, codes, RFID identifications, hypertext links or equivalent means). The invention is described in relation to an RFID identification incorporated into the container 200, but it is understood that other equivalent means of identification can be used.

Identification of the recovered product is harmonized with the identification of the container so that the management system 100, by recognising a particular container, automatically recognises the nature of the recovered product inside the container. The containers 200 with the recovered products are identified and stored as a function of characteristics such as their nature. The filling of the container 200 is performed in such a way that its volume is generally constant. The management system 100 is therefore capable of transferring and of storing each container 200 according to its identification.

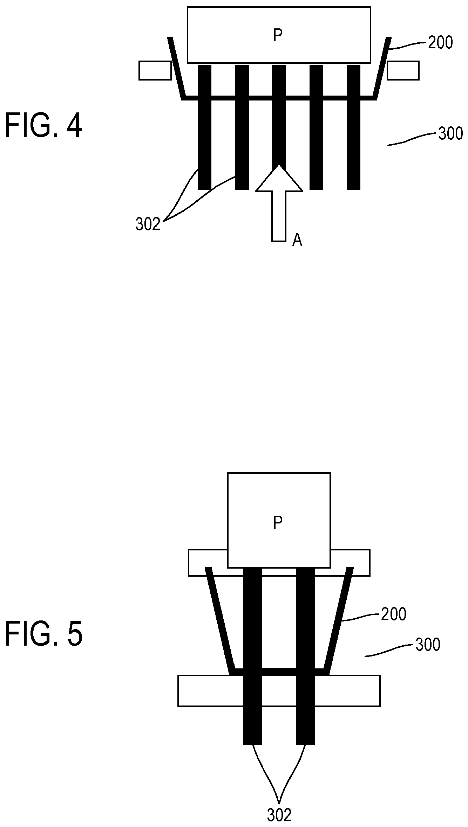

Referring once again to Figures 2 and 3 and also to Figures 4 and 5, the bottom 206 of the container 200 includes several orifices 206a aligned along the length of the bottom 206. A demoulding device 300 includes retractable fingers 302 in register with the orifices 206a of the container 200 (see Figure 4). The demoulding device 300 and the container 200 create a container-demoulding system of the management system 100. During a demoulding process, the retractable fingers 302 enter the container 200 through the orifices 206a (see arrow A in Figure 4) to push the recovered product (which is represented as P in Figures 4 and 5) and empty the container. The emptying of containers in the context of an exemplary method is described hereinafter.

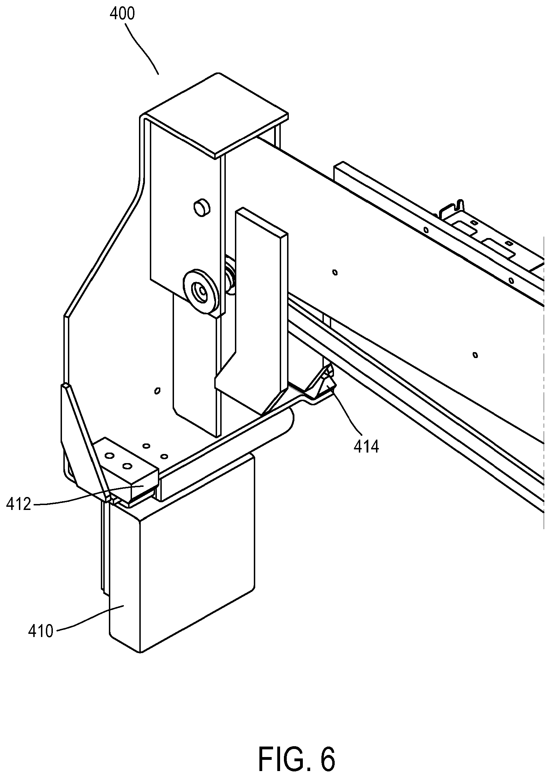

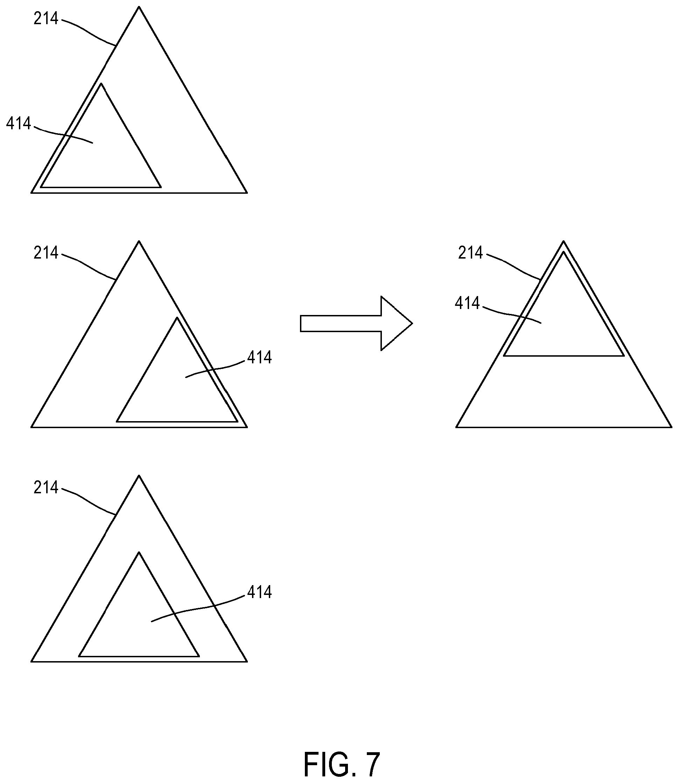

Referring once again to Figures 2 and 3 and also to Figures 6 and 7, each short side 204 of the container 200 includes an identification and gripping means that works together with an automated handling device. In this embodiment, the automated handling device is a gripper 400 (see Figure 6). The identification and gripping means includes an RFID tag 210, positioned on the container 200, that allows an RFID reader 410 positioned on the gripper 400 to identify the container 200. The identification and gripping means also includes a gripping system having a system of corresponding recesses and projections so that the gripping system allows the container 200 to be suitably positioned by realigning a projection in a corresponding recess. The recesses include a square recess 212 and a triangular recess 214 built into each short side 204 of the container 200. The projections include a square projection 412 and a triangular projection 414 on the gripper 400. It is understood that the geometry of the recesses and of the projections is not restricted to squares and triangles.

When the RFID reader 410 of the gripper 400 detects the RFID tag 210 of the container 200, a sensor of the RFID reader 410 indicates the presence of the container and also the correct position thereof in the gripper. As a result, the gripper 400 can manipulate the container 200 (for example, during a process of transferring the container). With reference to Figure 7, this figure depicts a schematic view of the triangular projection 414 of the gripper 400 in a working position inside the triangular recess 214 of the container 200. If the triangular projection 414 is not aligned with the triangular recess 214, the triangular projection is still guided towards a position of alignment with the triangular recess 214. As a result, whatever the status of the container (full or empty), and even if the container is not perfectly aligned on a pallet, the system of recesses and of projections allows the container 200 to be suitably positioned by the realigning of the projection in the corresponding recess.

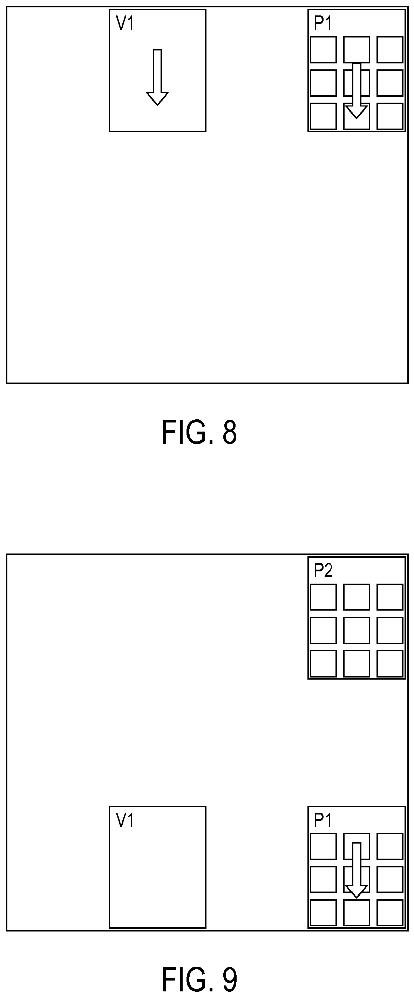

The configuration of the container 200 and the corresponding configuration of the gripper 400 also ensure suitable positioning of the container on a pallet. In one embodiment, each pallet used in the management system 100 is capable of storing and transporting up to nine containers 200 (full or empty) (see Figures 8 to 22). In the case of pallets completely filled with containers (full or empty)(or "complete pallets"), and also in the case of pallets that are not completely full of containers (or "incomplete pallets"), it is necessary to ensure suitable positioning of each container on the relevant pallet. The legs 208 of the container 200 enable stacking of the container on a pallet or on itself, and the identification and gripping means of the container 200 ensures suitable positioning (for example, ensuring vertical and horizontal alignment of containers with respect to one another and of containers with respect to the pallets).

The nature of a recovered product can therefore be guaranteed according to the recipe defined by the ongoing campaign. What is meant in the invention by "campaign" is the duration of operation of an internal mixer, or of a mixing plant, using the same recipe.

With reference yet again to Figure 1, the management system 100 makes it possible to carry out a method of managing the pallets of containers of recovered products, during which management method the availability of the pallets is also optimized. Identification of a pallet may be performed by known identification means, either manually (for example, using at least one visual, audio and/or tactile identifier) or automatically (for example using numerals, codes, RFID identifications, hypertext links or equivalent means) so that the identification of the pallet can be harmonized with the identification of the containers 200 (and therefore the identification of the recovered products) stored on the pallet. Pallets with containers full of recovered products originating from a container storage system are fed into the management system 100. At the exit of the management system, the same pallets with the empty containers become available.

In order to unload the recovered products and manage the supply fed to an internal mixer, the management system 100 includes equipment in which management zones are established. In particular, the management system 100 is made up of four belts I, II, III, IV (see Figure 1) that allow a production throughput by managing the entry, transfer, storage and exit of natures of recovered products.

Belt I is a provisioning circuit on which pallets of full containers (including pallets filled with full containers and pallets that are not completely filled with full containers), enter the management system 100 via an inlet 102 (see arrow B in Figure 1). The pallets are complete or incomplete according to the ongoing campaign.

Belt II is a discharge circuit on which incomplete pallets of full containers leave the management system 100 via an outlet 104 (see arrow C in Figure 1). The discharging of incomplete pallets of full containers is performed at the end of each campaign.

Belt III is an empty-pallet provisioning and discharge circuit on which the empty pallets enter and leave the management system 100 via an access 106 (see arrow D in Figure 1). Belt III allows empty pallets to be placed on standby until such time as they are used by the management system 100.

Belt IV is a discharge circuit on which complete pallets of empty containers leave the management system 100 via an outlet 108 (see arrow E in Figure 1).

During a pallet management method, an automated handling device will handle the containers (for example, using the gripper 400) from the pallets on which the full containers are stored (belt I) towards a demoulding station (not shown). This same device will also retrieve the empty containers and convey them to a pallet on which empty containers are stored (belt IV). At the end of the campaign, if the pallet of belt I in the process of being used is not completely finished, this pallet will pass on to the belt II, which is an intermediate storage belt before the incomplete pallet is returned to the system for the storage of recovered products. Belt III will be used to receive and discharge empty pallets from the system for the storage of recovered products. Belt III will also be used as intermediate storage for pallets that are not completely filled with empty containers.

Referring again to Figure 1, each of the four belts is divided into distinct management zones (or "stations") corresponding to different functions. For example, the belt I includes a provisioning zone I-A in which the pallets of full containers enter the management system 100; a standby zone I-B in which the pallets remain on standby on the belt I during the ongoing campaign; and a standby-for-emptying zone I-C in which the pallets remain on standby awaiting emptying. Belt II includes two discharge zones II-a, II-b in which the incomplete pallets with full containers are transferred to the outlet of the management system 100 so that they can be stored in the system for the storage of recovered products; and an emptying zone II-c in which the containers of the pallet on standby are emptied. Belt III includes an empty-pallet provisioning/discharge zone III-a in which the empty pallets enter and leave the management system 100; a pallet-standby zone IV-b in which pallets remain on standby awaiting empty containers; and a stacking zone V-c in which the empty containers are stored on available pallets. Belt IV includes a discharge zone IV-a in which the pallets stocked with the empty containers leave the management system 100. The four belts and their zones together define the paths followed by the pallets during the various mixing campaigns. More specifically, the four belts and their zones make it possible to carry out a method in which the pallets with containers full of recovered products and the pallets with empty containers are transferred so as to achieve the conditions for the ongoing campaign.

Referring also to Figures 8 to 33, a detailed description of one cycle of one example of a management method is given. All references to the management zones correspond to the management zones described hereinabove with reference to Figure 1. All references to a "container" or to the "containers" mean a container 200 as described herein. The full containers are containers full of recovered products, which are stored on corresponding pallets. According to the requirements of the ongoing campaign, the full containers are stored on pallets as a function of the nature of the recovered products. In this example, a rule is applied such that any pallet having more than six (6) empty containers is evacuated from the pallet management system 100. It is understood that the rule applicable to the evacuation of pallets with empty containers can be modified as needed.

With reference to Figure 8, as soon as a first campaign begins, the management system 100 receives a pallet P1 via the inlet 102. The pallet P1, filled with full containers, arrives on the belt I in the provisioning zone I-a. At the same time, the management system 100 receives an empty pallet V1 via the access 106. The empty pallet V1 arrives on the belt III in the empty-pallet provisioning/discharge zone III-a.

With reference to Figure 9, the belt I advances the pallet P1 as far as the standby-for-emptying zone I-c. At the same time, a pallet P2 filled with full containers arrives on the belt I in the provisioning zone I-a. At the same time too, the belt III advances the empty pallet V1 as far as the stacking zone III-c.

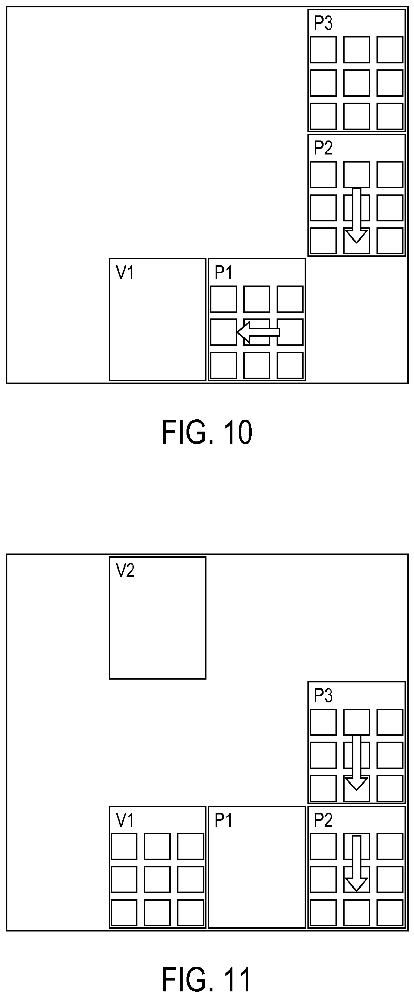

With reference to Figure 10, the pallet P1 is transferred, by known means, from the standby-for-emptying zone I-c of the belt I to the emptying zone II-c of the belt II. Belt I advances the pallet P2 towards the standby zone I-b at the same time as a pallet P3 filled with full containers arrives on the belt I in the provisioning zone I-a. The pallet P1 remains on standby in the emptying zone II-c of the belt II. The pallet V1 remains on standby in the stacking zone III-c of the belt III.

With reference to Figure 11, the belt I, at the same time, advances the pallet P2 as far as the standby-for-emptying zone I-c and also advances the pallet P3 as far as the standby zone I-b. An empty pallet V2 arrives on the belt III in the empty-pallet provisioning/discharge zone I-a.

The pallet P1 remains on the belt II when the containers of the pallet P1 are emptied during a demoulding process. The demoulding process includes a step of emptying the containers full of recovered products. In one embodiment, the step of emptying containers full of recovered products includes a step of using the demoulding device 300 such that the retractable fingers 302 enter the container 200 through the orifices 206a (see Figures 4 and 5). During this step, the retractable fingers 302 raise the recovered product so as to empty the container. The recovered products obtained from the containers are set down on a loading means (for example, a belt, a scale or any other known means) that feeds a mixer.

After the step of emptying the containers, the empty containers are transferred, by known means, to the empty pallet V1 that is waiting on standby on the belt III. The pallet P1 is completely empty, and the pallet V1 is completely filled with empty containers.

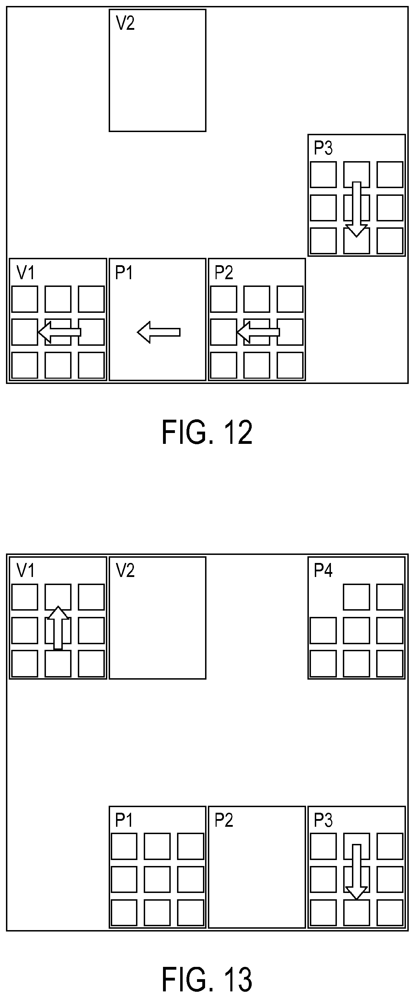

With reference to Figure 12, the pallet P1, now empty, is transferred from the emptying zone II-c of the belt II to the stacking zone III-c at the belt III. The pallet P2, still filled with containers, is transferred from the standby-for-emptying zone I-c of the belt I to the emptying zone II-c of the belt II. The pallet P3, still filled with containers, is in the process of being advanced to the standby-for-emptying zone of the belt I. The empty pallet V2 remains on standby in the empty-pallet provisioning/discharge zone III-a of the belt III. In order to discharge the pallet V1 from the management system 100, the pallet V1 is transferred from the stacking zone III-c of the belt III to the discharge zone IV-a of the belt IV (see arrow E in Figure 1).

With reference to Figure 13, the containers of the pallet P2 are emptied during a demoulding process as described hereinabove with reference to the containers of the pallet P1. The containers of the pallet P2, which are now empty, are transferred to the pallet P1 that is on standby in the stacking zone III-c of the belt III. The pallet P2, which is now empty, remains in the emptying zone II-c of the belt II. Belt I advances the pallet P3, still filled with full containers, towards the standby-for-emptying zone I-c of the belt I. Belt IV transports the pallet V1, filled with empty containers, towards the outlet 108, so that it can be discharged from the management system 100. The empty containers of the pallet V1 are transferred either towards the system for the storage of recovered products or towards a re-provisioning station (not depicted) where these containers are once again filled with the same nature of recovered product. The pallet V1, by its identification means, is identified as being an available pallet on which containers can again be stored.

In order to prepare for another campaign, a pallet P4 that is not completely filled with full containers arrives in the provisioning zone I-a of the belt I. The pallet V2 remains on standby in the empty-pallet provisioning/discharge zone III-a of the belt III.

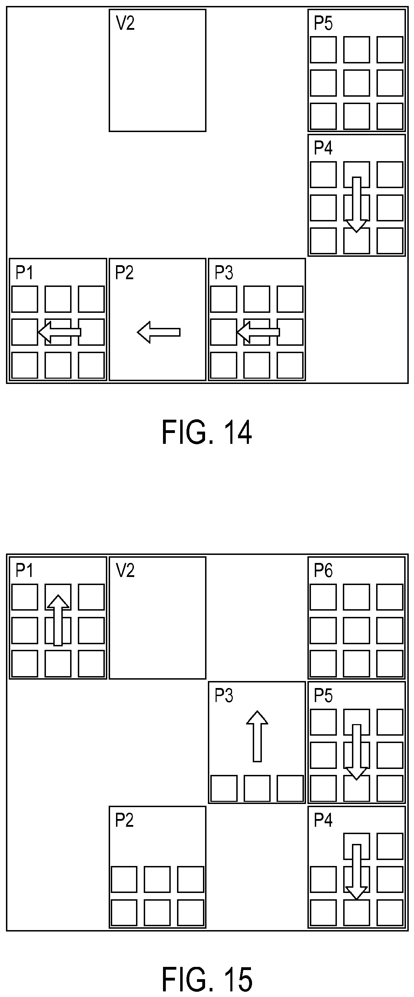

With reference to Figure 14, in order to discharge the pallet P1 from the management system 100, pallet P1 is transferred from the stacking zone III-c of the belt III to the discharge zone IV-a of the belt IV. The empty containers of the pallet P1 are transferred either towards the system for the storage of recovered products or towards a re-provisioning station (not depicted) where these containers are once again filled with the same nature of recovered product. The pallet P1, by means of its means of identification, is identified as being an available pallet on which containers can again be stored. The pallet P2 is transferred from the emptying zone II-c of the belt II to the stacking zone III-c of the belt III. Belt I advances the pallet P4 towards the standby zone I-b at the moment that a pallet P5 filled with full containers arrives in the provisioning zone I-a of the belt I. The pallet V2 remains on standby in the empty-pallet provisioning/discharge zone III-a of the belt III.

With reference to Figure 15, the belt IV transports the pallet P1 to the discharge zone IV-a and toward the outlet 108 of the management system 100. According to the requirements of the first campaign, six containers of the pallet P3 are emptied during a demoulding process as described hereinabove. The empty containers are transferred to the pallet P2 that is still in the stacking zone III-c of the belt III. The first campaign ends with this transfer.

The belt II transports the pallet P3, and the three full containers still remaining on this pallet, to the discharge zone II-b of the belt II. The transfer of the pallet P3 signifies the end of a campaign. Belt I advances the pallet P4 towards the standby-for-emptying zone I-c and also advances the pallet P5 towards the standby zone I-b. At the same time, a pallet P6 filled with full containers arrives in the provisioning zone I-a of the belt I. The pallet V2 remains on standby in the empty-pallet provisioning/discharge zone III-a of the belt III.

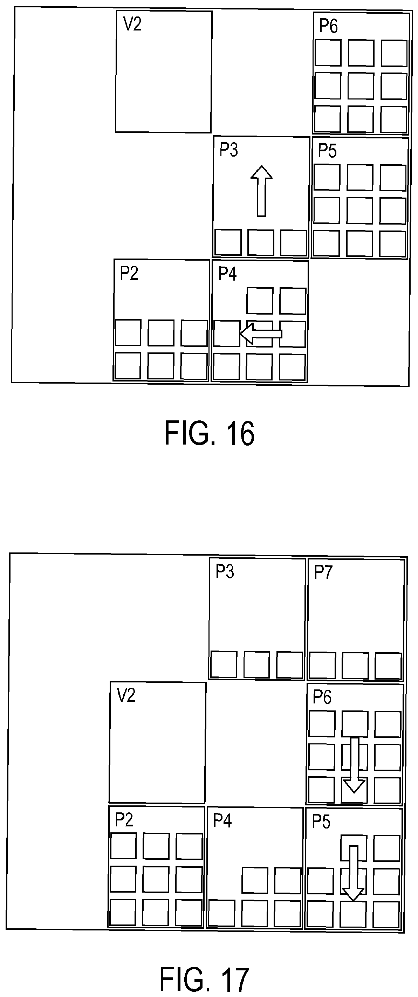

With reference to Figure 16, the pallet P1 has been completely discharged from the management system 100. This pallet will be stored or will be used in a subsequent campaign for transferring the same nature of recovered products, up to nine full containers. The pallet P4, which will be used for the start of the second campaign, is transferred from the standby-for-emptying zone I-a of the belt I to the emptying zone of the belt II. The transfer of the pallet P4 signifies the start of another campaign. Belt II is in the process of transferring the pallet P3 to the discharge zone II-a of the belt II.

The pallet P2 is made up of six empty containers, and the pallet P4 is made up of eight full containers, giving a total of 14 containers. Each pallet is made up of a maximum of nine containers. At this moment in the second campaign, because the total number of containers (14) is greater than the maximum number of containers for the pallet (9), the management system 100 places the pallet V2 on standby in the empty-pallet provisioning/discharge zone III-a of the belt III.

With reference to Figure 17, and according to the requirements of the second campaign, there are three containers of the pallet P4 that are emptied during a demoulding process as described hereinabove. The three empty containers are transferred from the pallet P4 to the pallet P2 to fill the pallet P2 with the empty containers. Five full containers remain on the pallet P4.

The belt I advances the pallet P5 towards the standby-for-emptying zone I-c and also advances the pallet P6 towards the standby zone I-b. According to the requirements of another campaign, a pallet P7 with three full containers arrives in the provisioning zone I-a of the belt I. The belt II advances the pallet P3 towards the outlet 104 so that it can be discharged from the management system 100. The three full containers remaining on the pallet P3 will be stored in the system for the storage of recovered products so that they can be used in another campaign. The belt III advances the empty pallet V2 towards the pallet standby zone III-b.

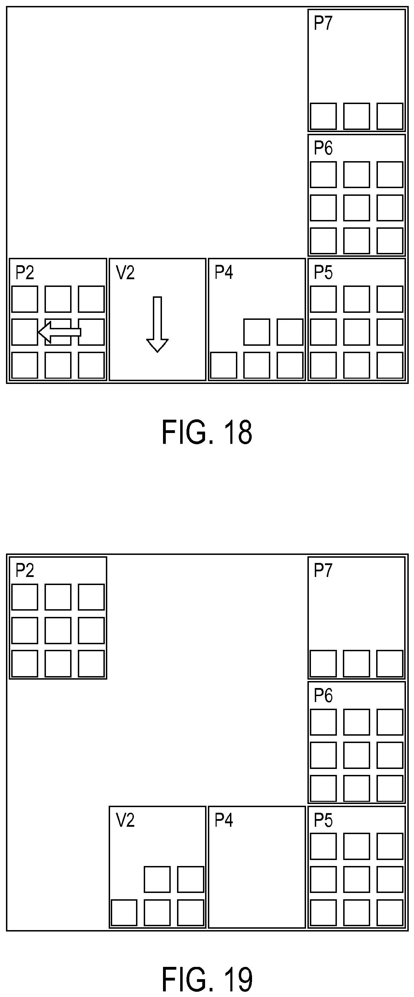

With reference to Figure 18, the pallet P3 has been completely discharged from the management system 100. The pallet P2, filled with nine empty containers, is transferred from the stacking zone III-c of the belt III to the discharge zone IV-a of the belt IV so that it can be discharged from the management system 100. The belt III advances the pallet V2 towards the stacking zone III-c to replace the pallet P2 at this location (see arrow D in Figure 1).

With reference to Figure 19, the belt IV advances the pallet P2 to the outlet 108 of the management system 100. The empty containers stored on the pallet P2 are now available to be filled again with the same kind of recovered products. The five containers that remain on the pallet P4 are emptied during a demoulding process as described hereinabove. These empty containers are transferred to the pallet V2 that is still on standby in the stacking zone III-c of the belt III. The pallet P4 no longer bears any containers.

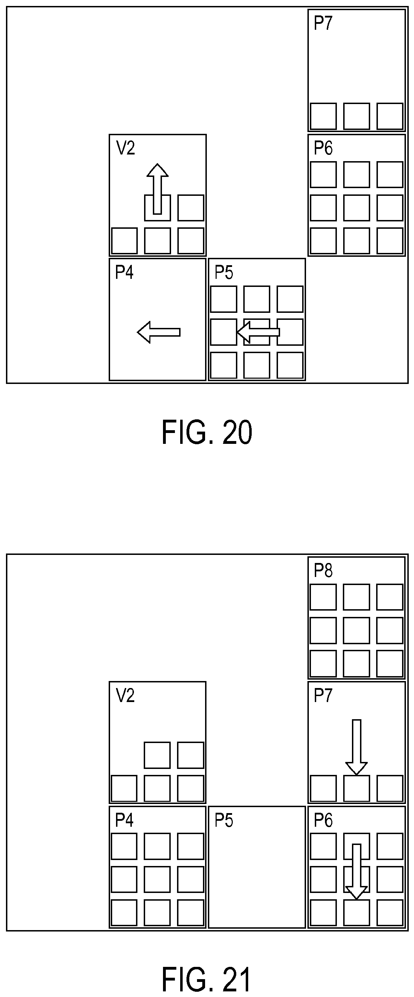

With reference to Figure 20, the pallet P2 has been completely discharged from the management system 100. The belt III advances the pallet V2 (which carries the five empty containers transferred from the pallet P4) towards the pallet standby zone III-b. The pallet P4, now empty, is transferred from the emptying zone II-c of the belt II to the stacking zone III-c of the belt III. The pallet P5, filled with nine full containers, is transferred from the standby-for-emptying zone I-c of the belt I to the emptying zone II-c of the belt II. The pallets P6 and P7 remain in place on the belt I.

With reference to Figure 21, the containers of the pallet P5 are emptied during a demoulding process as described hereinabove. The empty containers are transferred, by known means, from the pallet P5 to the pallet P4 that is still on standby in the stacking zone III-c of the belt III. The pallet V2 remains on standby in the pallet standby zone III-b of the belt III. The belt I advances the pallet P6 towards the standby-for-emptying zone I-c and also advances the pallet P7 towards the standby zone I-b. At the same time, a pallet P8, filled with full containers, arrives in the provisioning zone I-a of the belt I.

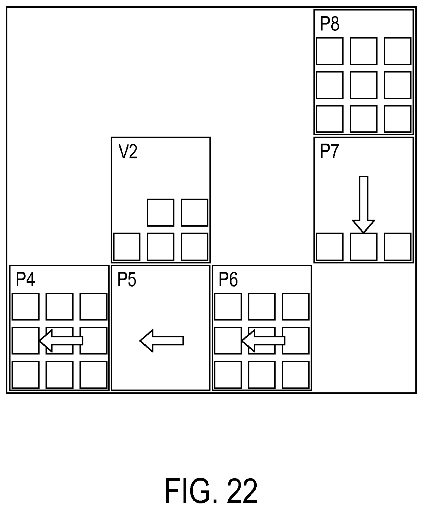

With reference to Figure 22, in order to discharge the pallet P4 from the management system 100, the pallet P4, filled with empty containers, is transferred from the stacking zone III-c of the belt III to the discharge zone IV-a of the belt IV. The pallet P5, now empty, is transferred from the emptying zone II-c of the belt II to the stacking zone III-c of the belt III. The pallet P6 is transferred from the standby-for-emptying zone I-c of the belt I to the emptying zone II-c of the belt II. The belt I is in the process of advancing the pallet P7 towards the standby-for-emptying zone I-c and is also in the process of advancing the pallet P8 towards the standby zone I-b. The pallet V2 remains on standby in the pallet standby zone III-b of the belt III until there is an opportunity to fill the pallet V2 with empty containers.

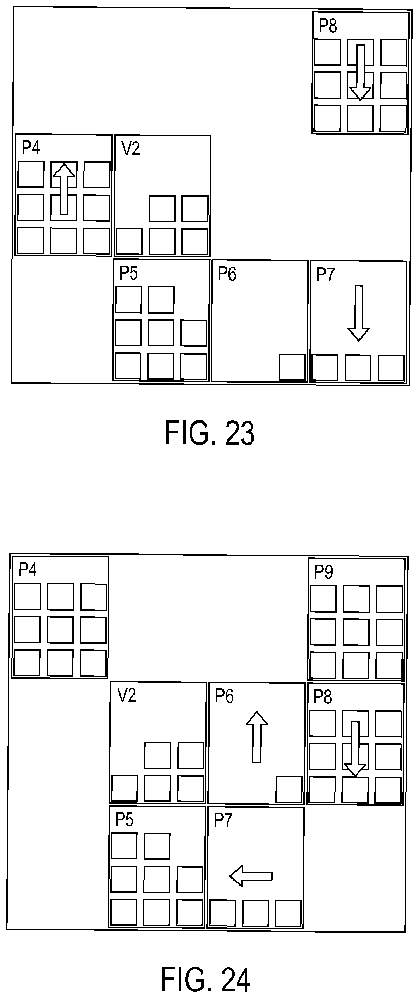

Referring to Fig. 23, there are eight (8) containers from pallet P6 that are emptied during a demoulding process as described hereinabove. The last full container remains on the pallet P6 and will eventually be evacuated, along with the pallet P6, from the system 100. The empty containers are transferred, by known means, from the pallet P6 to the pallet P5 that remains on standby in the stacking zone III-c of the belt III. The V2 pallet remains on standby with five (5) empty containers in the pallet waiting zone III-b of the belt III. The belt I, which advances the pallet P7 to the standby-for-emptying zone I-c, is also in the process of advancing the pallet P8 to the standby zone I-b. The belt IV advances the pallet P4 toward the outlet exit 108.

Referring to FIG. 24, the pallet P7 is transferred from the standby-for-emptying zone I-c of the belt I to the emptying zone II-c of the belt II. The transfer of the pallet P7 signifies the start of another campaign. The belt I advances the pallet P8 to the standby-for-emptying zone I-c. At the same time, a pallet P9, completely filled with full containers, arrives at the provisioning zone I-a of the belt I. The belt II advances the pallet P6, now with only one full container, from the discharge zone II-a to the discharge zone II-b. The transfer of the pallet P6 signifies the end of the previous campaign. The belt IV is in the process of evacuating the pallet P4 from the system 100 via the outlet 108.

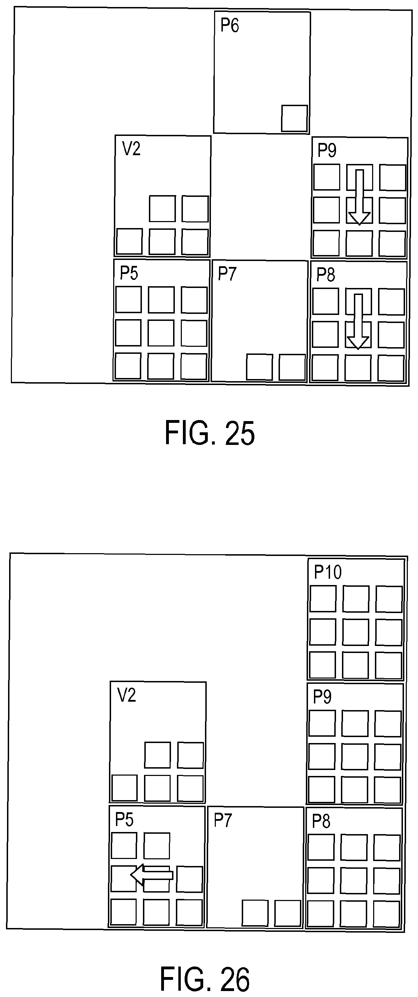

With reference to FIG. 25, the belt I advances the pallet P8 towards the standby-for-emptying zone I-c and also advances the pallet P9 towards the standby zone I-b. There is one full container from the P7 pallet that is emptied during a demoulding process as described above. There are two (2) full containers remaining on the P7 pallet. The empty container is transferred, by known means, from the pallet P7 to the pallet P5 that is still waiting in the stacking zone III-c of the belt III. The pallet P5 is thus complete empty filled with empty containers. The pallet V2 remains on standby in the pallet standby zone III-b of the belt III. The belt II is in the process of evacuating the pallet P6 from the system 100 via the outlet 104.

Referring to FIG. 26, in order to evacuate the pallet P5 from the system 100, the pallet P5, filled with empty containers, is transferred from the stacking zone III-c of the belt III to the discharge zone IV-a of the belt IV. At the same time, a pallet P10, completely filled with full containers, arrives at the provisioning zone I-a of the belt I.

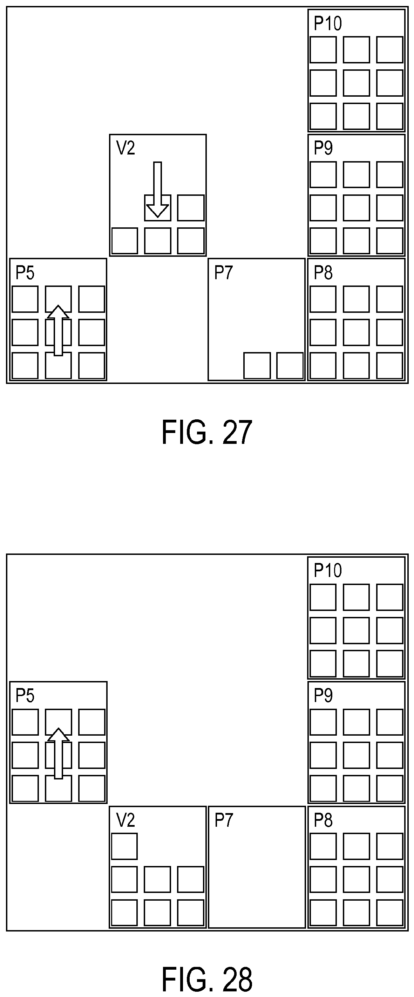

Referring to Fig. 27, the pallet V2 is transferred from the pallet standby zone III-b to the stacking zone III-c of the belt III. The belt IV is in the process of evacuating the pallet P5 from the system 100 via the outlet 108. The pallet P7 remains on standby in the emptying zone II-c.

Referring to Fig. 28, the two (2) full containers remaining on the pallet P7 are emptied during a demoulding process as described herienabove. The empty containers are transferred, by known means, from the pallet P7 to the pallet V2 that is on standby in the stacking zone III-c of the belt III. The P7 pallet is now completely empty of containers. The belt IV continues its advancement of the pallet P5 toward the outlet 108.

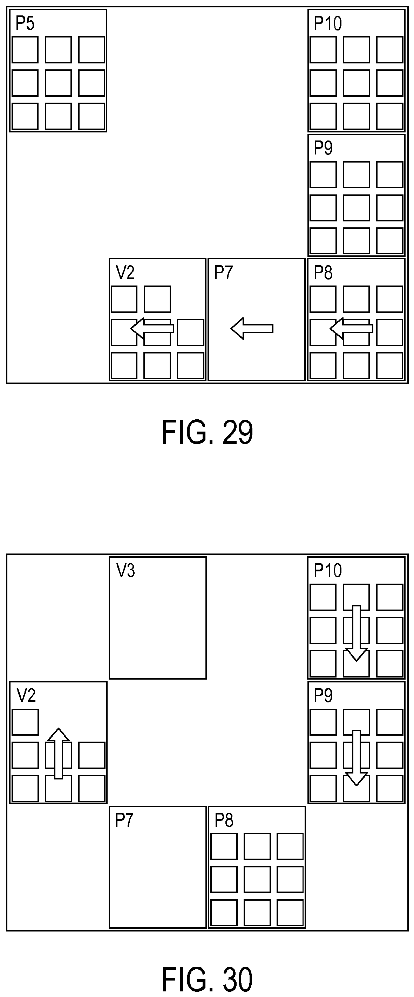

Referring to FIG. 29, in order to evacuate the pallet V2 from the system 100, and in order to follow the rule applicable to the evacuation of pallets with empty containers, the pallet V2, having seven (7) empty containers, is transferred from the stacking zone III-c of the belt III to the discharge zone IV-a of the belt IV. The pallet P7 is transferred from the emptying zone II-c of the belt II to the stacking zone III-c of the belt III. The pallet P8 is in the process of being transferred from the standby-for-emptying zone I-c of the belt I to the emptying zone II-c of the belt II. The belt IV brings the pallet P5 to the outlet 108 in order to effect the evacuation of this pallet from the system 100.

Referring to FIG. 30, pallet P7, being completely empty, is transferred by known means from the emptying zone II-c of the belt II to the stacking zone III-c of the belt III. The pallet P8 is transferred from the standby-for-emptying zone I-c of the belt I to the emptying zone II-c of the belt II. The belt I advances the pallet P9 to the standby-for-emptying zone I-c and also advances the pallet P10 to the standby zone I-b. An empty pallet V3 arrives in the empty pallet provisioning/discharge zone III-a of the belt III. The belt IV advances the pallet V2 toward the outlet 108 in order to evacuate this pallet from the system 100.

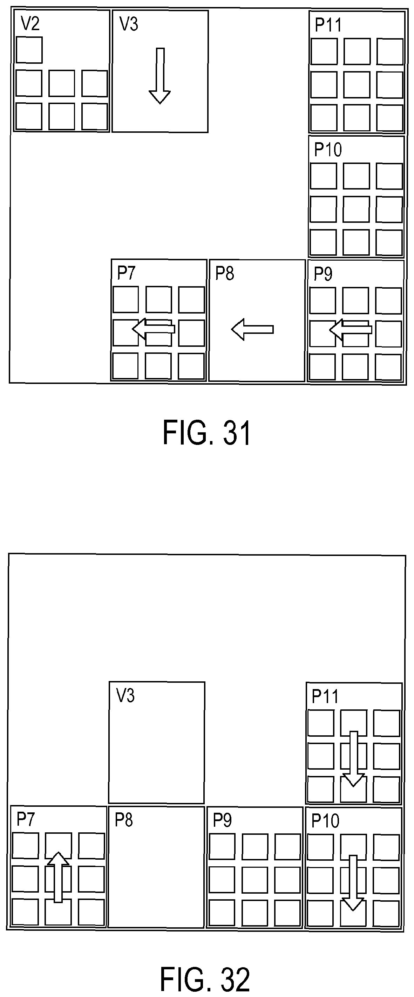

Referring to Fig. 31, all of the remaining containers of pallet P7 are emptied during a demoulding process as described above. The empty containers are transferred, by known means, from the pallet P8 to the pallet P7 that is waiting in the stacking zone III-c of the belt III. The pallet P7 is now completely filled with empty containers, and the pallet P8 is completely empty. The empty pallet V3 advances from the empty pallet provisioning/discharge zone III-a to the pallet standby zone III-b. The belt I advances the pallet P9 to the standby-for-emptying zone I-c and also advances the pallet P10 to the standby zone I-b. At the same time, a pallet P11, completely filled with full containers, arrives at the provisioning zone I-a of the belt I. The belt IV brings the pallet V2 to the outlet 108 and effects evacuation of this pallet from the system 100.

Referring to FIG. 32, in order to evacuate the pallet P7 from the system 100, the pallet P7 is transferred by known means from the stacking zone III-c of the belt III to the discharge zone IV-a of the belt IV. The pallet P8 is transferred by known means from the emptying zone II-c of the belt II to the stacking zone III-c of the belt III. The pallet V3 is transferred from the empty pallet provisioning/discharge zone III-a to the pallet standby zone III-b of the belt III. The pallet P9 is transferred from the standby-for-emptying zone I-c of the belt I to the emptying zone II-c of the belt II. The belt I advances the pallet P10 towards the standby-for-emptying zone I-c and also advances the pallet P11 towards the standby zone I-b. The belt IV moves the pallet P7 toward the outlet 108 to effect its evacuation from the system 100.

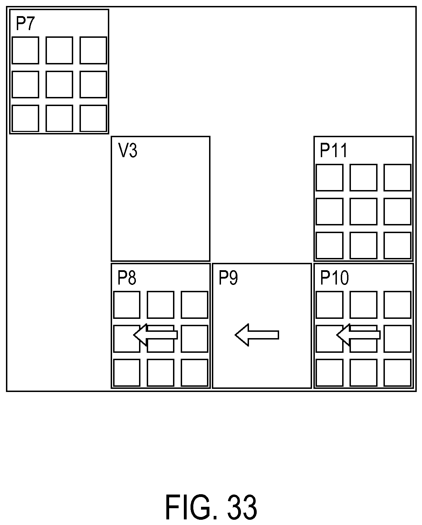

Referring to Fig. 33, at the end of the ongoing campaign, and at the end of the cycle, all containers from the pallet P9 are emptied during a demoulding process as described hereinabove. The empty containers are transferred, by known means, from the pallet P9 to the pallet P8 that is on standby in the stacking zone III-c of the belt III. The pallet P8 is now completely filled with empty containers, and the pallet P9 is completely empty. The empty pallet V3 remains on standby in the pallet standby zone III-b. The pallet P8 will be transferred from the stacking zone III-c of the belt III to the evacuation zone IV-a of the belt IV in order to evacuate the pallet P8 from the system 100. The empty pallet P9 will be transferred from the emptying zone II-c of the belt II towards the stacking zone III-c of the belt III in preparation for receiving subsequent empty containers. The pallet P10 will be transferred from the standby-for-emptying zone I-c of the belt I to the emptying zone II-c of the belt II, where the containers from the pallet P10 will be emptied during a demoulding process as described above. The belt IV brings the pallet P7 to the outlet 108 to effect its evacuation from the system 100.

A functional structure is thus created that delimits several distinct zones while at the same time ensuring continuous controlled progression that allows management of the pallets of containers of recovered products. Pallet and container availability is also optimized in order to improve the forecasts for pallet and container storage space requirements.

A cycle of the method may be performed by PLC control and may include pre-programming of management data (for example, a total number of containers required when these are offered with a certain number of natures, a total number of available empty pallets, a number of pallets on standby, a residence time that a pallet spends on standby in the management system, etc.).

For all the embodiments, a system can be put in place to ensure the repeatability of the location and position of each container and/or each pallet. Verification can be effected by a known means, including a viewing system that may be manual or automated (for example, with one or more cameras in communication with the PLC). The PLC is configured to check the natures of the stored recovered products against the chosen mixture recipe, in terms of weight required and in the prescribed tolerance. The conformity of the properties of the mixture during the course of each campaign is thus respected.

The terms "at least one" and "one or more" are used interchangeably. The ranges given as lying "between a and b" encompass the values of "a" and "b".

Although particular embodiments of the invention have been illustrated and described, it will be appreciated that various changes, additions and modifications can be made without departing from either the spirit or scope of the present description. Therefore, no limitation should be imposed on the scope of the invention described, apart from those set out in the appended claims.

## Claims

1. A management system (100) for the management of pallets of containers of recovered products, retrieved from a system for the storage of recovered products, according to an ongoing campaign, in which the system comprises:
a belt (I) on which pallets of containers, including pallets filled with full containers and pallets that are not completely filled with full containers, enter the management system (100) via an inlet (102);
a belt (II) on which incomplete pallets of full containers are discharged from the management system (100) via a full-containers outlet (104);
a belt (III) on which completely empty pallets enter the management system (100) via an access (106) and are discharged from the management system via the access (106); and
a belt (IV) on which complete pallets of empty containers are discharged from the management system (100) via an empty-containers outlet (108).

2. The management system (100) of claim 1, in which:
the belt (I) comprises:
a provisioning zone (I-a) in which the pallets of full containers enter a management system;
a standby zone (I-b) in which the pallets remain on standby during the ongoing campaign; and
a standby-for-emptying zone (I-c) in which the pallets remain on standby awaiting emptying;
the belt (II) comprises:
two discharge zones (II-a, II-b) in which the pallets with full containers are transferred to an exit (104) so that they can be stored in the system for the storage of recovered products; and
an emptying zone (II-c) in which the containers from the pallet on standby are emptied;
the belt (III) comprises:
an empty-pallet provisioning/discharge zone (III-a) in which the empty pallets enter and leave the management system (100);
a pallet standby zone (III-b) in which pallets remain on standby awaiting empty containers; and
a stacking zone (III-c) in which the empty containers are stored on available pallets; and
the belt (IV) comprises a discharge zone (IV-a) in which the pallets stocked with the empty containers leave the management system (100).

3. The management system (100) of claim 1 or of claim 2, further comprising several containers (200) designated for receiving the corresponding recovered products, each container having a pair of long sides (202), a pair of short sides (204) and a bottom (206) that together form a space to receive a corresponding recovered product, and a pair of legs (208) that extend from the bottom (206) so as to make the container stackable on a pallet or on itself.

4. The management system (100) of claim 3, further comprising an identification and gripping means with an RFID tag (210), positioned on the container (200), that allows an RFID reader (410) positioned on a gripper (400) to identify the container.

5. The management system (100) of Claim 4, in which the identification and gripping means further comprises a gripping system with:
a square recess (212) and a triangular recess (214) built into each short side (204) of the container; and
a square projection (412) and a triangular projection (414) on the gripper (400);
so that the gripping system allows the container (200) to be suitably positioned by realigning a projection in a corresponding recess.

6. The management system (100) of any one of claims 3 to 5, further comprising a container demoulding system for demoulding the container (200).

7. The management system (100) of claim 6, in which the demoulding system comprises a demoulding device (300) having retractable fingers (302) in register with orifices (206a) aligned along the length of the bottom (206) of the container (200);
such that the retractable fingers enter the container (200) through the orifices (206a) and raise the recovered product so as to empty the container.

8. The management system (100) of any one of claims 1 to 7, further comprising several pallets previously identified as a function of the ongoing campaign, on which pallets the containers full of recovered products and the empty containers are stored during a pallet transfer management sequence, the transfer management sequence being obtained as a function of the ongoing campaign.

9. The management system (100) of claim 8, in which each pallet used in the management system is capable of storing and transporting up to nine containers (200).

10. The management system (100) of claim 8 or of claim 9, in which pallets with containers full of recovered products, originating from a system for the storage of recovered products, are fed into the management system.

11. The management system (100) of any one of claims 8 to 10, further comprising an identification means for harmonizing the identification of a pallet with the identification of the containers (200) stored on the pallet.

## Patentansprüche

1. Leitsystem (100) für das Leiten von Paletten für Behälter von zurückgewonnenen Produkten, die aus einem System für die Lagerung von zurückgewonnenen Produkten entnommen werden, entsprechend einer laufenden Kampagne, wobei das System Folgendes umfasst:
ein Förderband (I), auf dem Paletten mit Behältern, die Paletten, die mit vollen Behältern befüllt sind, und Paletten, die nicht vollständig mit vollen Behältern gefüllt sind, umfassen, über einen Einlass (102) in das Leitsystem (100) eintreten;
ein Förderband (II), auf dem unvollständige Paletten mit vollen Behältern vom Leitsystem (100) über einen Auslass (104) für volle Behälter abgeführt werden;
ein Förderband (III), auf dem vollständig leere Paletten über einen Zugang (106) in das Leitsystem (100) eintreten und über den Zugang (106) vom Leitsystem abgeführt werden; und
ein Förderband (IV), auf dem vollständige Paletten mit leeren Behältern vom Leitsystem (100) über einen Auslass (108) für leere Behälter abgeführt werden.

2. Leitsystem (100) nach Anspruch 1, wobei:
das Förderband (I) Folgendes umfasst:
eine Bereitstellungszone (I-a), in der die Paletten mit vollen Behältern in ein Leitsystem eintreten;
eine Bereitschaftszone (I-b), in der die Paletten während der laufenden Kampagne in Bereitschaft bleiben; und eine Bereitschaftszone (I-c) zum Entleeren, in der Paletten in Bereitschaft bleiben, die auf das Entleeren warten;
das Förderband (II) Folgendes umfasst:
zwei Abführzonen (II-a, II-b), in denen die Paletten mit vollen Behältern zu einem Ausgang (104) umgeladen werden, so dass sie im System zur Lagerung von zurückgewonnenen Produkten gelagert werden können; und
eine Entleerungszone (II-c), in der die Behälter von der Palette in Bereitschaft entleert werden;
das Förderband (III) Folgendes umfasst:
eine Zone (III-a) zum Bereitstellen bzw. Abführen einer leeren Palette, in der die leeren Paletten in das Leitsystem (100) eintreten und dieses verlassen;
eine Paletten-Bereitschaftszone (III-b), in der Paletten in Bereitschaft bleiben, die auf leere Behälter warten; und
eine Stapelzone (III-c), in der die leeren Behälter auf verfügbaren Paletten gelagert werden; und
das Förderband (IV) eine Abführzone (IV-a) umfasst, in der die Paletten, auf denen die leeren Behälter gelagert sind, das Leitsystem (100) verlassen.

3. Leitsystem (100) nach Anspruch 1 oder nach Anspruch 2, das ferner mehrere Behälter (200) umfasst, die zum Aufnehmen der entsprechenden zurückgewonnenen Produkte vorgesehen sind, wobei jeder Behälter ein Paar lange Seiten (202), ein Paar kurze Seiten (204) und einen Boden (206), die zusammen einen Raum zum Aufnehmen eines entsprechenden zurückgewonnenen Produkts bilden, und ein Paar Füße (208), die sich vom Boden (206) erstrecken, so dass der Behälter auf einer Palette oder selbst gestapelt werden kann, aufweist.

4. Leitsystem (100) nach Anspruch 3, das ferner Mittel zur Identifikation und zum Ergreifen mit einem RFID-Etikett (210) umfasst, die am Behälter (200) positioniert sind, die ermöglichen, dass ein RFID-Lesegerät (410), das an einem Greifer (400) positioniert ist, den Behälter identifiziert.

5. Leitsystem (100) nach Anspruch 4, in dem die Mittel zum Identifizieren und Ergreifen ferner ein Greifsystem umfassen, das Folgendes aufweist:
eine quadratische Vertiefung (212) und eine dreieckige Vertiefung (214), die in jeder kurzen Seite (204) des Behälters ausgebildet sind; und
einen quadratischen Vorsprung (412) und einen dreieckigen Vorsprung (414) am Greifer (400);
so dass das Greifsystem ermöglicht, dass der Behälter (200) durch Ausrichten eines Vorsprungs in einer entsprechenden Vertiefung passend positioniert werden kann.

6. Leitsystem (100) nach einem der Ansprüche 3 bis 5, das ferner ein Behälter-Entleerungssystem zum Entleeren des Behälters (200) umfasst.

7. Leitsystem (100) nach Anspruch 6, wobei das Entleerungssystem eine Entleerungsvorrichtung (300) umfasst, die zurückziehbare Finger (302) in Übereinstimmung mit Öffnungen (206a) aufweist, die längs der Länge des Bodens (206) des Behälters (200) ausgerichtet sind;
so dass die zurückziehbaren Finger durch die Öffnungen (206a) in den Behälter (200) eintreten und das zurückgewonnene Produkt anheben, um den Behälter zu leeren.

8. Leitsystem (100) nach einem der Ansprüche 1 bis 7, das ferner mehrere Paletten umfasst, die zuvor in Abhängigkeit von der laufenden Kampagne identifiziert wurden, wobei auf diesen Paletten die Behälter, die mit zurückgewonnenen Produkten gefüllt sind, und die leeren Behälter während einer Leitsequenz zum Übertragen von Paletten gelagert werden, wobei die Leitsequenz zum Übertragen in Abhängigkeit von der laufenden Kampagne realisiert wird.

9. Leitsystem (100) nach Anspruch 8, wobei jede Palette, die im Leitsystem verwendet wird, bis zu neun Behälter (200) lagern und transportieren kann.

10. Leitsystem (100) nach Anspruch 8 oder nach Anspruch 9, wobei die Paletten mit Behältern, die mit zurückgewonnenen Produkten gefüllt sind, die aus einem System für die Lagerung von zurückgewonnenen Produkten stammen, in das Leitsystem eingespeist werden.

11. Leitsystem (100) nach einem der Ansprüche 8 bis 10, das ferner Identifikationsmittel zum Abstimmen der Identifikation einer Palette mit der Identifikation der Behälter (200), die auf der Palette gelagert sind, umfasst.

## Revendications

1. Système de gestion (100) pour réaliser la gestion des palettes de contenants de produits valorisés, récupérés d'un système de stockage de produits valorisés, selon une campagne en cours, dans lequel le système comprend :
un tapis (I) où des palettes de contenants, y compris des palettes remplies de contenants pleins et des palettes pas complètement remplies de contenants pleins, entrent dans le système de gestion (100) par une entrée (102) ;
un tapis (II) où des palettes incomplètes de contenants pleins sont évacuées du système de gestion (100) par une sortie de contenants pleins (104) ;
un tapis (III) où des palettes complètement vides entrent dans le système de gestion (100) par un accès (106), et sont évacués du système de gestion par l'accès (106) ; et
un tapis (IV) où des palettes complètes de contenants vides sont évacuées du système de gestion (100) par une sortie de contenants vides (108) .

2. Système de gestion (100) de la revendication 1, dans lequel:
le tapis (I) comprend :
une zone d'approvisionnement (I-a) où les palettes de contenants pleins entrent dans un système de gestion;
une zone d'attente (I-b) où les palettes restent en attente pendant la campagne en cours ; et
une zone attente vidage (I-c) où les palettes restent en attente pour leur vidage ;
le tapis (II) comprend :
deux zones d'évacuation (II-a, II-b) où les palettes avec des contenants pleins sont transférées vers la sortie de contenants pleins (104) pour les stocker dans le système de stockage de produits valorisés ; et
une zone de vidage (II-c) où les contenants de la palette en attente sont vidés ;
le tapis (III) comprend :
une zone d'approvisionnement/évacuation palette vide (III-a) où les palettes vides entrent et sortent du système de gestion (100) ;
une zone d'attente de palette (III-b) où des palettes restent en attente des contenants vides ; et
une zone d'empilage (III-c) où les contenants vides sont stockés sur des palettes disponibles ; et
le tapis (IV) comprend une zone d'évacuation (IV-a) où les palettes stockées avec les contenants vides sortent du système de gestion (100).

3. Système de gestion (100) de la revendication 1 ou de la revendication 2, comprenant en outre plusieurs contenants (200) désignés pour recevoir les produits valorisés correspondants, chaque contenant avec des grands côtés (202), des petits côtés (204) et un fond (206) qui forment ensemble un espace pour recevoir un produit valorisé correspondant et une paire de pieds (208) qui s'étendent en bas du fond (206) pour rendre le contenant empilable sur une palette ou sur lui-même.

4. Système de gestion (100) de la revendication 3, comprenant en outre un moyen d'identification et de préhension avec un tag RFID (210) positionné sur le contenant (200) qui permet l'identification du contenant par un lecteur RFID (410) positionné sur un préhenseur (400).

5. Système de gestion (100) de la revendication 4, dans lequel le moyen d'identification et de préhension comprend en outre un système de préhension avec :
un renfoncement carré (212) et un renfoncement triangle (214) intégrés à chaque petit côté (204) du contenant; et
une saillie carrée (412) et une saillie triangle (414) sur le préhenseur (400) ;
de sorte que le système de préhension permet un bon positionnement du contenant (200) grâce au recentrage d'une saillie dans un renforcement correspondant.

6. Système de gestion (100) de l'une quelconque des revendications 3 à 5, comprenant en outre un système de démoulage de contenant (200).

7. Système de gestion (100) de la revendication 6, dans lequel le système de démoulage comprend un dispositif de démoulage (300) qui inclut des doigts escamotables (302) ayant une correspondance avec des orifices (206a) alignées le long de la longueur du fond (206) du contenant (200) ;
de sorte que les doigts escamotables s'introduisent dans le contenant (200) à travers les orifices (206a) et élèvent le produit valorisé pour vider le contenant.

8. Système de gestion (100) de l'une quelconque des revendications 1 à 7, comprenant en outre plusieurs palettes préalablement identifiées en fonction de la campagne en cours, sur lesquelles les contenants pleins de produits valorisés et les contenants vides sont stockés pendant une séquence de gestion de transfert des palettes, la séquence de gestion de transfert étant obtenue en fonction de la campagne en cours.

9. Système de gestion (100) de la revendication 8, dans lequel chaque palette utilisée dans le système de gestion est capable de stocker et transporter jusqu'à neuf contenants (200).

10. Système de gestion (100) de la revendication 8 ou de la revendication 9, dans lequel des palettes avec des contenants pleins de produits valorisés, en provenance d'un système de stockage de produits valorisés, alimentent le système de gestion.

11. Système de gestion (100) de l'une quelconque des revendications 8 à 10, comprenant en outre un moyen d'identification pour harmoniser l'identification d'une palette avec l'identification des contenants (200) stockés sur la palette.
